# EUROPEAN PATENT SPECIFICATION

(11) **EP 4 148 473 B1**
(45) Date of publication and mention of the grant of the patent: **08.04.2026**
(21) Application number: 21306224.3
(22) Date of filing: 08.09.2021
(51) Int. Cl.: G02B 6/38, G02B 6/44, E21B 33/035

(54) **A SUBSEA FIBRE TERMINATION UNIT**
UNTERWASSERFASERABSCHLUSSEINHEIT
UNITÉ DE TERMINAISON DE FIBRE SOUS-MARINE

(43) Date of publication of application: 15.03.2023
(73) Proprietor: Nexans, 92400 Courbevoie (FR)
(72) Inventor: WIINBERG, Kristian, 1363 Høvik (NO)
(74) Representative: Acapo Onsagers AS

(56) References cited:
- US-A- 5 110 224
- US-A1- 2007 227 740
- US-A1- 2010 059 229
- US-A1- 2016 097 906
- US-A1- 2019 257 170
- US-A1- 2019 352 993

## Description

### FIELD OF THE INVENTION

The present invention relates to subsea fibre termination units for fibre optic cables.

### BACKGROUND OF THE INVENTION

Today's subsea fibre termination unit (FTU) solutions for fibre optic cables are often bulky and require larger convolute with larger reels and/or larger compartments for transport or installation of the reels. Generally, it is recommended to position the wet mate connectors at a certain elevation above the seabed.

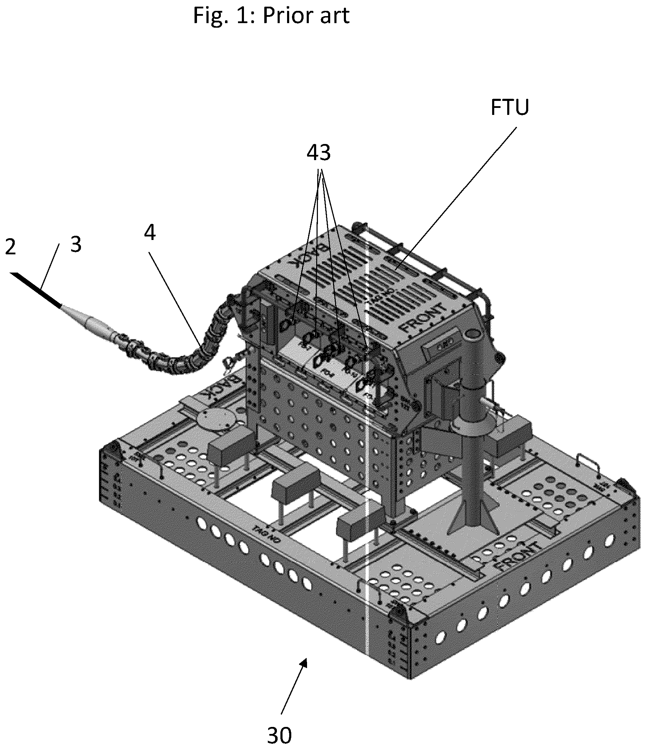

Fig. 1 shows a typical state-of-the-art solution for a subsea fibre termination unit (FTU) used today. The FTU is attached to a subsea foundation 30. The FTU has several subsea communication connection interfaces 43. The FTU is connected to a fibre optic cable 3 which is equipped with a cable bend restrictor 4. The FTU is relatively large and bulky.

US2010038090A1 by Barratt et al. discloses an underwater termination assembly for use with a subsea system such as a well tree, comprises a construction having first and second limbs substantially at a right-angle to each other, which construction may be lowered having an umbilical connected to one of the limbs so that said one of the limbs sits on the bed of a body of water. It is stated that one variant could allow the ROV intervention panel to hinge down to lie on top of the termination area, reducing the transportation and storage size.

US 2019/352993A1 relates to a termination head and a connection system for a multi-bore flying lead or umbilical, the connection system comprising a first connector part having a number of couplers associated with internal conduits of the multi-bore flying lead or umbilical, a second connector part having a corresponding number of couplers associated with internal conduits of a subsea structure, wherein in a mating position between the first and second connector parts, the first connector part can be pulled towards the second connector part for connection of said couplers.

The present invention aims at providing a compact and robust subsea fibre termination unit (FTU) for fibre optic cables that is easy to transport and install. The invention combines the elevated wet mate connector with a slim termination unit design.

### SUMMARY OF THE INVENTION

The present invention relates to a subsea fibre termination unit for subsea termination of a fibre optic cable according to claim 1.

The aspects of the invention are set out in the appended dependent claims.

### DETAILED DESCRIPTION

Different embodiments of the invention will now be described in detail with reference to the enclosed drawings, wherein:
Fig 1 shows a state-of-the-art FTU
Fig. 2 is a perspective view showing a FTU mounted to a subsea foundation and connected to a central communication unit and a subsea unit,
Fig. 3 is a perspective view showing the FTU connected to a fibre optic cable,
Fig. 4a is a perspective view showing the FTU in a transport state,
Fig. 4b is a perspective view showing the FTU in a usage state,
Fig. 5a is a side view showing the FTU in the transport state,
Fig. 5b is a side view showing the FTU in the transport state with transportation lid removed,
Fig. 5c is a side view showing the FTU in the usage state,
Fig. 6a, Fig 6b and Fig 6c show different views of the FTU in the usage state,
Fig. 7a is a cross-sectional view of the FTU in the usage state,
Fig. 7b is a perspective view of the FTU in the usage state,
Fig. 8 is a top view showing the FTU mounted to a subsea foundation,
Fig. 9 is a perspective view of the FTU mounted to the subsea foundation.

### A Subsea Fibre Termination Unit 10

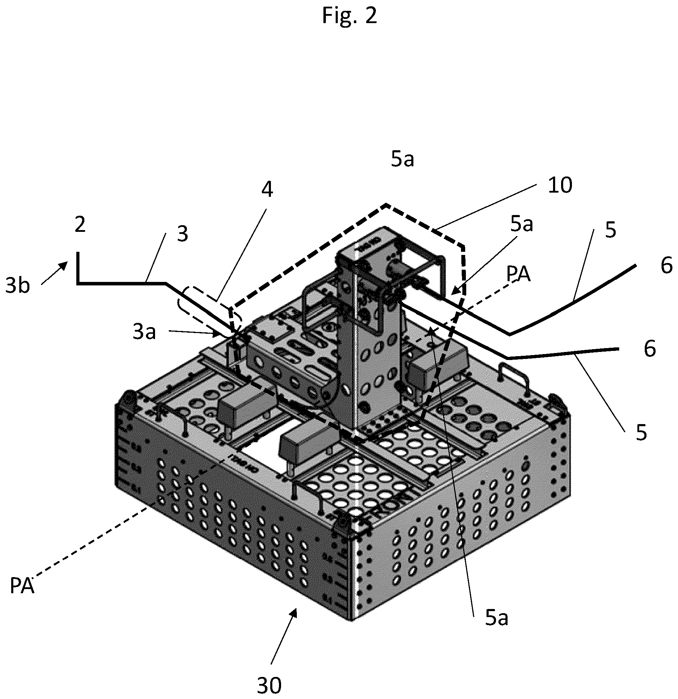

Shown in fig. 2, is the present invention in a perspective view. Similar to the prior art in fig. 1, also here a subsea fibre termination unit 10 is attached to a subsea foundation 30 and is providing communication with a central communication unit 2. The subsea fibre termination unit 10 comprises two subsea communication connection interfaces 43, which allows two subsea units 6 to be connected to the central communication unit 2 via a fibre optic cable 3 and two pluggable fibre optic cables 5 connected to the connection interfaces 43. The subsea communication connection interfaces 43 can be a wet mate connector. A proximal end 5a of the pluggable fibre optic cable 5 can be a wet mate connector.

The fibre optic cable 3 can be equipped with a cable bend restrictor 4 at the proximal end 3a of the fibre optic cable 3.

The subsea fibre termination unit 10 comprises a first frame 20 and a second frame 40 pivotably connected to the first frame.

### First frame 20 and second frame 40

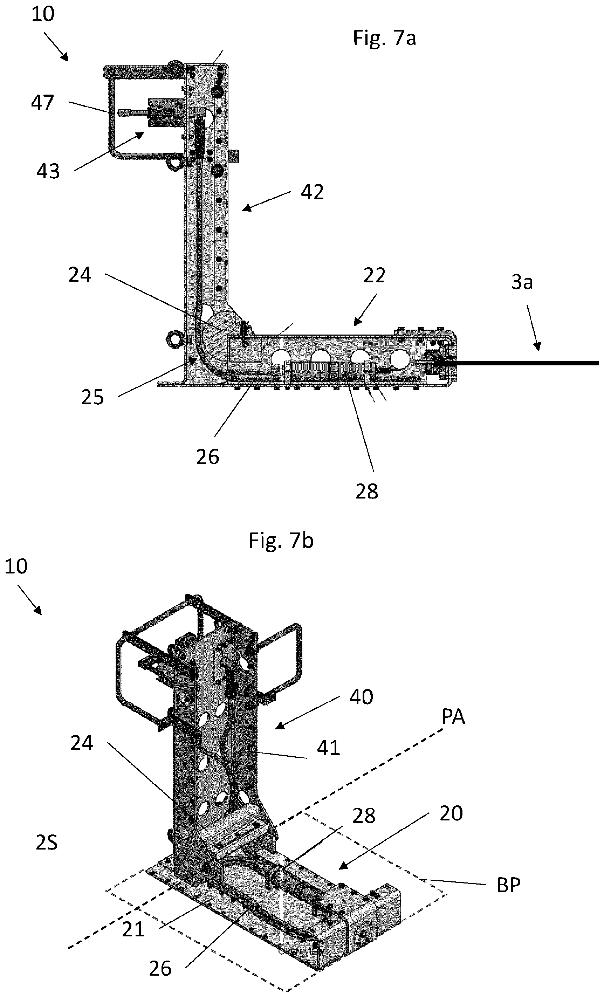

Fig 7a and 7b show that the first frame 20 comprises a first profile element 21 and a first protection lid 22. In the present embodiment, the first protection lid 22 has an open box cross-sectional profile. Hence, the first frame 20 defines a first protective compartment between the first profile element 21 and a first protection lid 22.

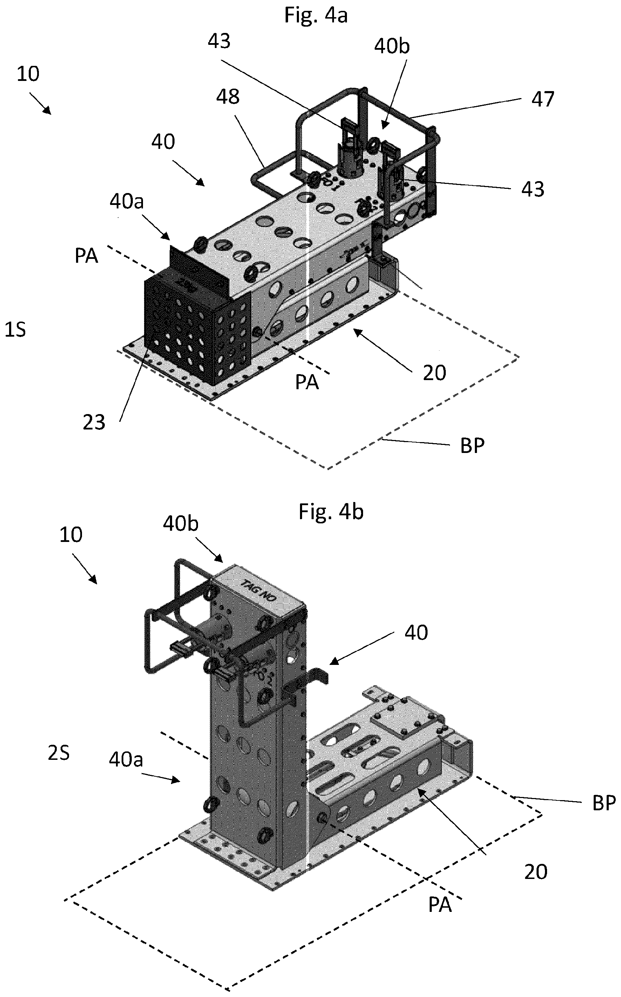

It is shown in fig. 4a and 4b that the first frame 20 defines a base plane BP.

Fig. 4a and 4b show that the second frame 40 has a first end 40a, in which the second frame 40 is pivotably connected to the first frame 20, thereby defining a pivoting axis PA. The second frame has a second end 40b, in which a subsea connection communication interface 43 is provided. Hence, there is a distance between the subsea communication connection interface 43 and the pivoting axis PA.

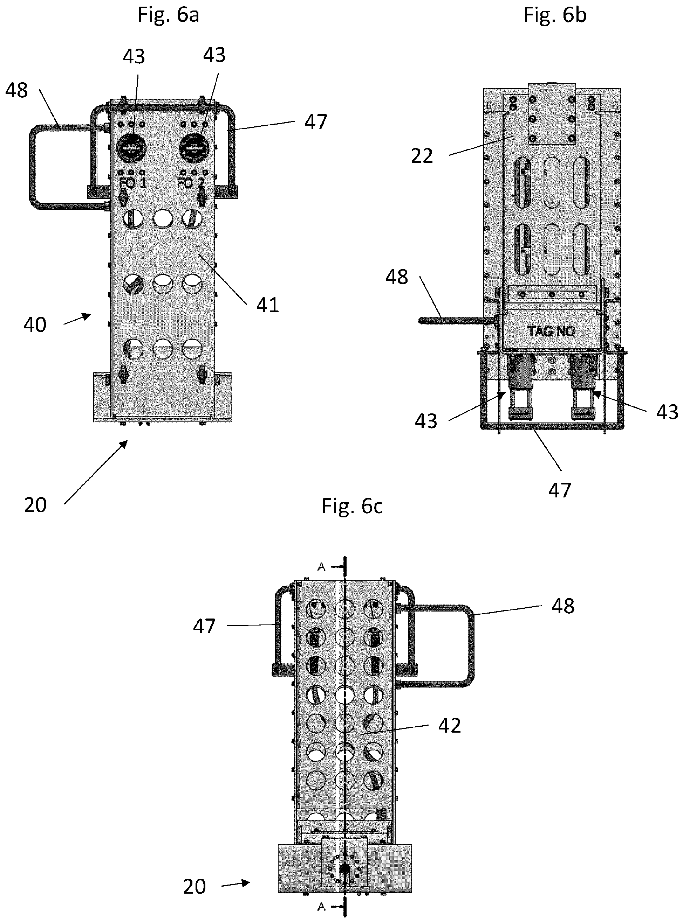

Fig 6a and 6c show that the second frame 40 comprises a second profile element 41 and a second protection lid 42. In present embodiment, both the second profile element 41 and a second protection lid 42 have a U-shaped or an open box cross-sectional profile. Hence, the second frame 40 defines a second protective compartment between the second profile element 41 and a second protection lid 42.

The first profile element 21 and the first protection lid 22 as well as the second profile element 41 and the second protection lid 42 may be joined by a suitable joining method such bolting or welding.

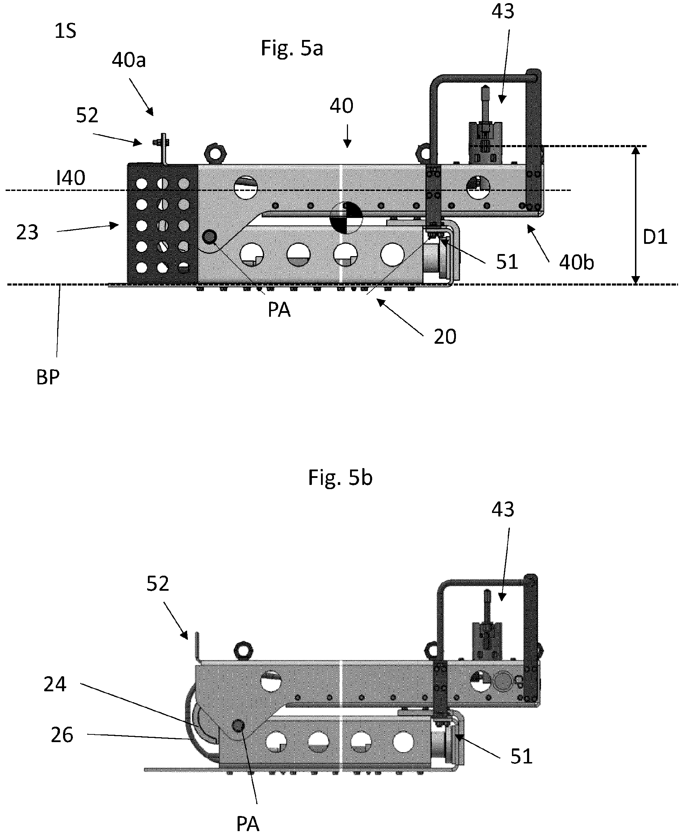

Fig 5a shows that the second frame 40 defines a longitudinal axis I40 between its first end 40a and its second end 40b.

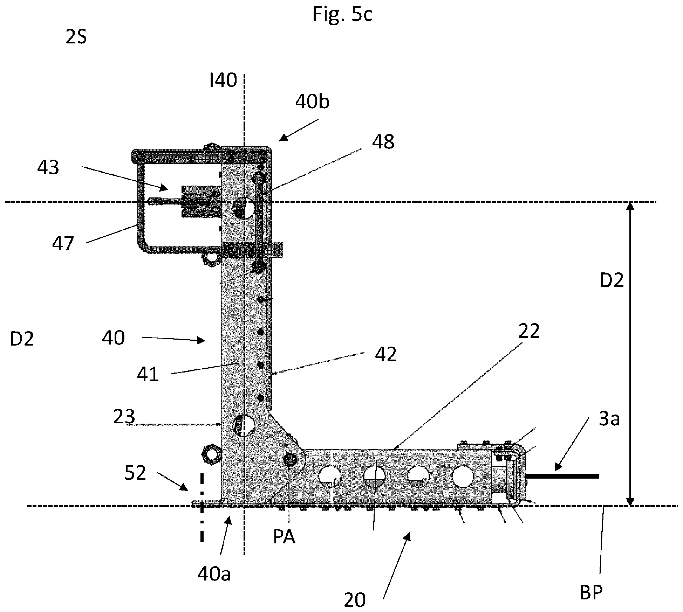

The subsea fibre termination unit 10 is configured to be in one of two states. In a first state 1S, shown in fig 4a and 5a, the longitudinal axis I40 of the second frame 40 is parallel to the base plane BP. In a second state 2S, shown in fig. 4b and 5c, the longitudinal axis I40 of the second frame 40 is perpendicular to the base plane BP.

The first state 1S is a state in which the subsea fibre termination unit 10 can be transported easily. Hence, the first state 1S is a transport state. The second state 2S is a state in which the subsea fibre termination unit 10 can be used subsea. Hence, the second state 2S is a usage state.

As shown in fig 5a, there is a first distance D1 between the subsea communication connection interface 43 and the base plane BP in the first state S1. In the second state S2, shown in fig 5c, there is a second distance D2 between the subsea communication connection interface 43 and the base plane BP. The second distance D2 is considerably larger than the first distance D1.

The subsea fibre termination unit 10 further comprises a first locking mechanism 51, shown in fig 5a-5c, configured to secure the second frame 40 relative to the first frame 20 in the first state S1. The first locking mechanism 51 is securing the second end 40b of the second frame 40 to the first frame 20 in the first state S1. The first locking mechanism 51 is a bolted joint.

The subsea fibre termination unit 10 further comprises a second locking mechanism 52, shown in fig 5a-5c, configured to secure the second frame 40 relative to the first frame 20 in the second state S2. The second locking mechanism 52 is securing the second frame 40 to the first frame 20. The second locking mechanism 52 is a bolted joint. Here, the second locking mechanism 52 is securing the second frame 40 to the first frame 20 via a first profile element 21 secured to the first frame 20 as shown in fig 7b. The first profile element 21 is aligned with the base plane BP.

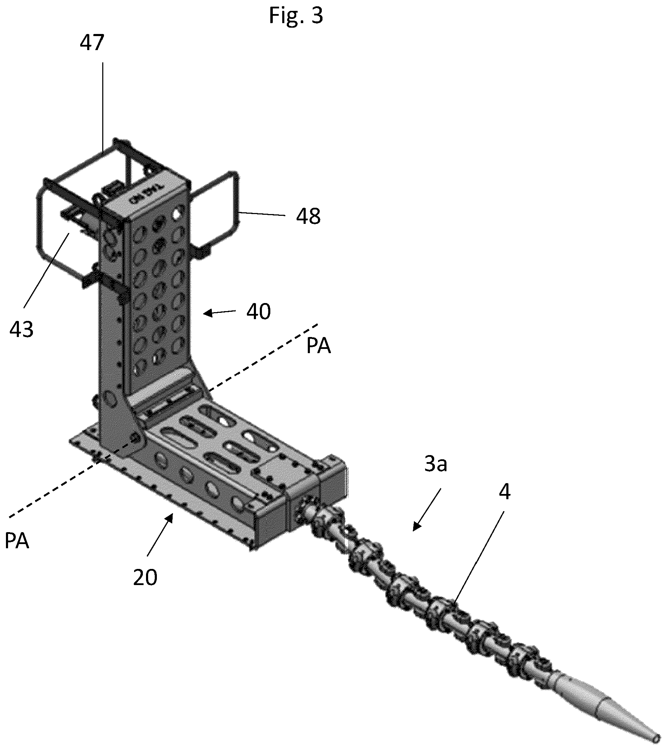

Figs 3, 4a and 4b show that the second frame 40 of the subsea termination unit 10 comprises a ROV and protection bar 47 and a ROV bar 48.

### FTU communication cable 26, terminal 28 and connectors 43

The parts of the subsea fibre termination unit 10 which enable communication will now be described. In fig. 7b, it is shown that the fibre termination unit 10 further comprises a communication cable 26 and a fibre termination terminal 28 in addition to the two subsea communication connectors 43 in the form of wet mate connectors.

As described above, the two subsea communication connectors 43 are provided in the second end 40b of the second frame 40, at a distance from the pivoting axis PA. The two subsea communication connectors 43 are accessible from the outside of the subsea fibre termination unit 10 and are hence not provided within the second protective compartment of the second frame 40.

The fibre termination terminal 28 is secured to the first frame 20 within the first protective compartment. As shown in fig. 7a, the fibre optic cable 3 is received into the first protective compartment of the first frame 20 and is terminated at the fibre termination terminal 28.

Fig 7a and 7b also show that there are two communication cables 26, one for each connector 43, which are guided from the fibre termination terminal 28 along and the first frame 20 inside the first protective compartment and further along the second frame 40 inside the second protective compartment to a rear side of the subsea communication connection interface 43. The two communication cables 26 are terminated at each of the subsea communication connection interfaces 43. Hence, communication is provided between the subsea communication connection interface 43 and the fibre optic cable 3 via the communication cable 26 and the fibre termination terminal 28.

Fig 7a and 7b show that the fibre termination unit 10 further comprises a bend guard 24 secured to the second frame 40 adjacent to the pivoting axis PA. The bend guard 24 is provided with a curved surface 25 faced towards the communication cables 26. The communication cables 26 are guided from the first frame 20 to the second frame 40 via the bend guard 24.

As shown in fig 7b, the communication cables 26 are arranged in a loop around the fibre termination terminal 28 along the first frame 20. This allows the communication cables 26 to move relative to the first frame 20 and the second frame 40 during movement of the second frame 40 between the first state 1S and the second state 2S and prevents undesired bending of the communication cables 26. The movement of the communication cable 26 relative to the first frame 20 and/or the second frame 40 is limited by fasteners such as cable ties.

### Using the FTU

The fibre optic cable 3 is terminated in the fibre termination terminal 28 of the subsea fibre termination unit 10 in a workshop or factory when the fibre optic cable is spooled on to a reel prior to installation offshore.

During transport, the subsea fibre termination unit 10 is in the first state 1S which makes it compact and easier to handle. Moreover, the subsea fibre termination unit 10 is robust and provides protection of the fibre optic cable 26 during transport and installation.

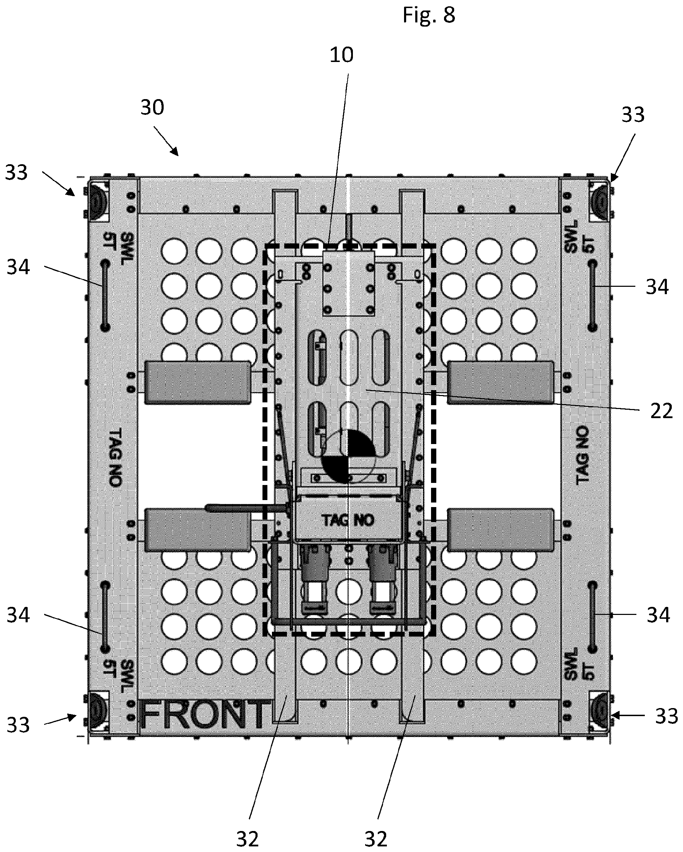

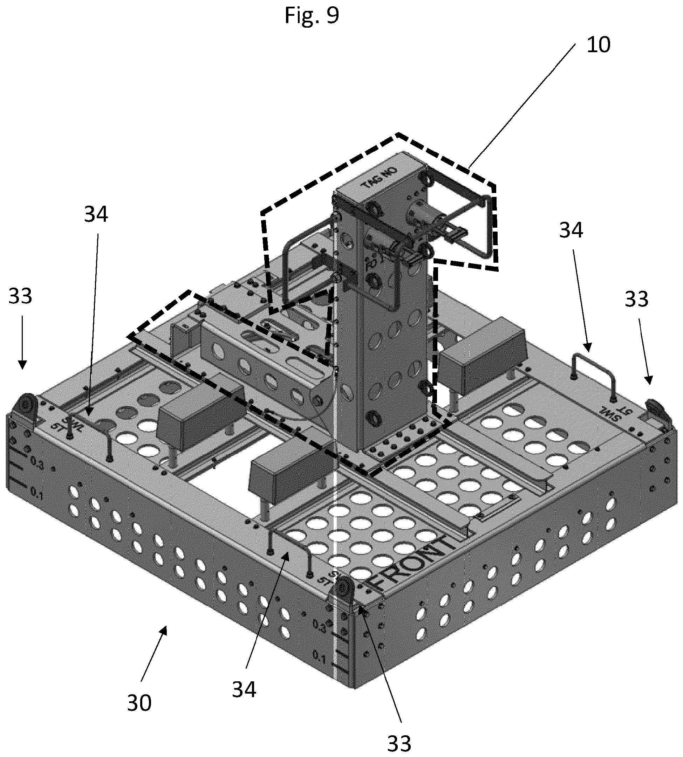

The fibre termination unit 10 is typically attached to a subsea foundation 30 on board of an installation vessel. The fibre termination unit 10 is in the first state 1S when it is attached to the subsea foundation 30. The first frame 20 of the fibre termination unit 10 is bolted to attachment rails 32 of the subsea foundation 30 as shown in fig. 8 and 9. Alternatively, the fibre termination unit 10 may be lowered down to the subsea foundation 30 and is attached to the foundation subsea, for example by the use of appropriate guiding and landing interface.

In the present embodiment, the first frame 20 is rigidly attached to a single subsea foundation 30 where the first frame 20 is placed in the centre of the subsea foundation 30. The subsea foundation 30 may be a mud mat or a rock mat or another type of foundation.

The fibre termination unit 10 is moved to the second state 2S prior to overboarding. For this purpose, locking bolts and nuts are removed to release the first locking mechanism 51 and to remove a removable transportation lid 23. The removable transportation lid 23 is protecting the communication cables 26 in the area adjacent to the bend guard 24 during transport.

The second frame 40 is moved to the second state 2S with the help of a crane from the installation vessel or an actuating mechanism. Once the second frame 40 has reached the second state 2S, the second locking mechanism 52 is secured by installing and tightening bolts and nuts.

As shown in fig 9, the subsea foundation 30 may be lifted by crane with the help of lifting eyes 33 and positioned subsea by a remotely operated vehicle by means of ROV bars 34.

After installation subsea, the subsea communication connection interface 43 is provided in a position above the seabed which makes it easy to connect equipment to the subsea communication connection interface 43 by means of a remotely operated vehicle. To support this operation, the subsea termination unit 10 is equipped with the ROV and protection bar 47 and the ROV bar 48.

### Alternative embodiments

In one embodiment, the fibre optic cable 3 may be considered to be a part of the subsea fibre termination unit 10. In a further embodiment, the fibre optic cable 3 may be considered to be separate from the subsea fibre termination unit 10.

In an alternative embodiment, the fibre termination terminal 28 and the subsea communication connection interface 43 are one unit. Here the proximal end 3a of the fibre optic cable is terminated in the combined fibre termination terminal 28 and the subsea communication connection interface 43 unit in a workshop or factory when the fibre optic cable is spooled on to a reel prior to installation offshore. In this embodiment, the subsea fibre termination unit 10 will be without the communication cable (26) and bend guard (24).

In an alternative embodiment, the subsea fibre termination unit 10 is in the first state 1S when it is attached to the subsea foundation 30 and is unfolded to the second state 2S after landing on the sea floor by means of a remotely operated vehicle or a remotely controlled actuating mechanism. The first and second locking mechanisms (51, 52) can be operated by a remotely operated vehicle or a remotely controlled actuating mechanism.

In yet another alternative embodiment, at least one of the first profile element 21 and/or second profile element 41 and/or the first protection lid 22 and/or second protection lid 42 is facing the curved surface of the bend guard when the subsea fibre termination unit 10 is in its first state S1 thus making the removable transportation lid 23 redundant.

### TERMINOLOGY

a subsea fibre termination unit (FTU) (10),
a central communication unit (2),
a fibre optic cable (3),
a proximal end (3a) of the fibre optic cable (3),
a distal end (3b) of the fibre optic cable (3),
a cable bend restrictor (4)
a pluggable fibre optic cable (5)
a proximal end (5a) of the pluggable fibre optic cable (5),
a first frame (20),
a first profile element (21),
a first protection lid (22),
a removable transportation lid (23),
a bend guard (24),
a curved surface (25) of the bend guard (24),
a communication cable (26),
a fibre termination terminal (28),
a subsea foundation (30),
an attachment rail (32),
a lifting eye (33),
a ROV bar (34) for the subsea foundation (30),
a second frame (40),
a first end (40a),
a second end (40b),
a second profile element (41),
a second protection lid (42),
a subsea communication connection interface (43),
a ROV and protection bar (47),
a ROV bar (48),
a first locking mechanism (51),
a second locking mechanism (52)
a base plane (BP),
is a first distance (D1),
a second distance (D2),
a longitudinal axis (I40),
a pivoting axis (PA),
a first state (1S),
a second state (2S).

## Claims

1. A subsea fibre termination unit (10) for subsea termination of a fibre optic cable (3), the subsea fibre termination unit (10) comprises:
- a first frame (20) attachable to a subsea foundation (30);
- a second frame (40) comprising a subsea communication connection interface (43);
- a fibre termination terminal (28) secured to the first frame (20) and connectable to a proximal end (3a) of a fibre optic cable (3);
**characterized in that**
the second frame (40) is pivotably connected to the first frame (20) thereby defining a pivoting axis (PA).

2. The subsea fibre termination unit (10) for subsea termination of the fibre optic cable (3) according to claim 1, wherein:
- the second frame (40) has a first end (40a), in which the second frame (40) is pivotably connected to the first frame (20),
- the second frame has a second end (40b), in which the subsea connection communication interface (43) is provided.

3. The subsea fibre termination unit (10) for subsea termination of the fibre optic cable (3) according to claim 2; wherein:
- the first frame (20) defines a base plane (BP);
- the second frame (40) defines a longitudinal axis (I40) between its first end (40a) and its second end (40b);
wherein the subsea fibre termination unit (10) is configured to be in one of the following states:
- a first state (1S), in which the longitudinal axis (I40) of the second frame (40) is aligned with the base plane (BP);
- a second state (2S), in which the longitudinal axis (I40) of the second frame (40) is protruding away from the base plane (BP).

4. The subsea fibre termination unit (10) for subsea termination of the fibre optic cable (3) according to claim 3, wherein the subsea fibre termination unit (10) comprises a first locking mechanism (51) configured to secure the second frame (40) relative to the first frame (20) in the first state (S1).

5. The subsea fibre termination unit (10) for subsea termination of the fibre optic cable (3) according to claim 3 or claim 4, wherein the subsea fibre termination unit (10) comprises a second locking mechanism (52) configured to secure the second frame (40) relative to the first frame (20) in the second state (S2).

6. The subsea fibre termination unit (10) for subsea termination of the fibre optic cable (3) according to any one of the previous claims, wherein:
- the subsea fibre termination unit (10) comprises a bend guard (24) connected to the first frame (20) and/or the second frame (40) adjacent to the pivoting axis (PA);
- a communication cable (26) is guided from the fibre termination terminal (28) along the first frame (20) and further along the second frame (40) to the subsea communication connection interface (43) via the bend guard (24).

7. The subsea fibre termination unit (10) for subsea termination of the fibre optic cable (3) according to claim 6, wherein the communication cable (26) is arranged in a loop along the first frame (20).

8. The subsea fibre termination unit (10) for subsea termination of the fibre optic cable (3) according to claim 7, wherein the communication cable (26) is arranged in a loop around the fibre termination terminal (28) along the first frame (20).

9. The subsea fibre termination unit (10) for subsea termination of the fibre optic cable (3) according to any one of claims 6 to 8, wherein the bend guard (24) is provided with a curved surface (25) faced towards the communication cable (26).

10. The subsea fibre termination unit (10) for subsea termination of the fibre optic cable (3) according to any one of claims 6 to 9 when also dependent on any one of claims 3 to 5, wherein the communication cable (26) is allowed to move relative to the first frame (20) and/or the second frame (40) during movement of the second frame (40) between the first state (1S) and the second state (2S).

11. The subsea fibre termination unit (10) for subsea termination of the fibre optic cable (3) according to any of the previous claims, wherein the first frame (20) defines a first protective compartment for the fibre termination terminal (28) and a part of the communication cable (26).

12. The subsea fibre termination unit (10) for subsea termination of the fibre optic cable (3) according to claim 11, wherein the first frame (20) comprises a first profile element (21) and a first protection lid (22).

13. The subsea fibre termination unit (10) for subsea termination of the fibre optic cable (3) according to any of the previous claims, wherein the second frame (40) defines a second protective compartment for a part of the communication cable (26).

14. The subsea fibre termination unit (10) for subsea termination of the fibre optic cable (3) according to claim 13, wherein the second frame (40) comprises a second profile element (41) and a second protection lid (42).

15. The subsea fibre termination unit (10) for subsea termination of the fibre optic cable (3) according to any one of claims 3-5, or any one of claims 6-14 when also dependent on one of claims 3-5, wherein the subsea fibre termination unit (10) comprises a removable transportation lid (23) secured to the first frame (20) and/or second frame (40); wherein the removable transportation lid (23) is facing the curved surface (25) of the bend guard (24) when the subsea fibre termination unit (10) is in its first state (S1); and wherein the communication cable (26) is provided between the removable transportation lid (23) and the bend guard (24) when the when the subsea fibre termination unit (10) is in its first state (S1).

## Patentansprüche

1. Unterwasserfaserabschlusseinheit (10) zum Unterwasserabschluss eines Glasfaserkabels (3), wobei die Unterwasserfaserabschlusseinheit (10) Folgendes umfasst:
- einen ersten Rahmen (20), der an einem Unterwasserfundament (30) anbringbar ist;
- einen zweiten Rahmen (40), der eine Unterwasserkommunikationsverbindungsschnittstelle (43) umfasst;
- einen Faserabschlussanschluss (28), der an dem ersten Rahmen (20) gesichert und mit einem proximalen Ende (3a) eines Glasfaserkabels (3) verbindbar ist;
**dadurch gekennzeichnet, dass**
der zweite Rahmen (40) schwenkbar mit dem ersten Rahmen (20) verbunden ist, wodurch eine Schwenkachse (PA) definiert ist.

2. Unterwasserfaserabschlusseinheit (10) zum Unterwasserabschluss des Glasfaserkabels (3) nach Anspruch 1, wobei:
- der zweite Rahmen (40) ein erstes Ende (40a) aufweist, in dem der zweite Rahmen (40) schwenkbar mit dem ersten Rahmen (20) verbunden ist,
- der zweite Rahmen ein zweites Ende (40b) aufweist, in dem die Unterwasserverbindungskommunikationsschnittstelle (43) bereitgestellt ist.

3. Unterwasserfaserabschlusseinheit (10) zum Unterwasserabschluss des Glasfaserkabels (3) nach Anspruch 2; wobei:
- der erste Rahmen (20) eine Basisebene (BP) definiert;
- der zweite Rahmen (40) eine Längsachse (I40) zwischen seinem ersten Ende (40a) und seinem zweiten Ende (40b) definiert;
wobei die Unterwasserfaserabschlusseinheit (10) dazu konfiguriert ist, in einem der folgenden Zustände zu sein:
- einem ersten Zustand (1S), in dem die Längsachse (I40) des zweiten Rahmens (40) mit der Basisebene (BP) ausgerichtet ist;
- einem zweiten Zustand (2S), in dem die Längsachse (I40) des zweiten Rahmens (40) weg von der Basisebene (BP) ragt.

4. Unterwasserfaserabschlusseinheit (10) zum Unterwasserabschluss des Glasfaserkabels (3) nach Anspruch 3, wobei die Unterwasserfaserabschlusseinheit (10) einen ersten Verriegelungsmechanismus (51) umfasst, der dazu konfiguriert ist, den zweiten Rahmen (40) relativ zu dem ersten Rahmen (20) in dem ersten Zustand (S1) zu sichern.

5. Unterwasserfaserabschlusseinheit (10) zum Unterwasserabschluss des Glasfaserkabels (3) nach Anspruch 3 oder Anspruch 4, wobei die Unterwasserfaserabschlusseinheit (10) einen zweiten Verriegelungsmechanismus (52) umfasst, der dazu konfiguriert ist, den zweiten Rahmen (40) relativ zu dem ersten Rahmen (20) in dem zweiten Zustand (S2) zu sichern.

6. Unterwasserfaserabschlusseinheit (10) zum Unterwasserabschluss des Glasfaserkabels (3) nach einem der vorhergehenden Ansprüche, wobei:
- die Unterwasserfaserabschlusseinheit (10) einen Biegeschutz (24) umfasst, der mit dem ersten Rahmen (20) und/oder dem zweiten Rahmen (40) benachbart zu der Schwenkachse (PA) verbunden ist;
- ein Kommunikationskabel (26) von dem Faserabschlussanschluss (28) entlang des ersten Rahmens (20) und weiter entlang des zweiten Rahmens (40) zu der Unterwasserkommunikationsverbindungsschnittstelle (43) über den Biegeschutz (24) geführt ist.

7. Unterwasserfaserabschlusseinheit (10) zum Unterwasserabschluss des Glasfaserkabels (3) nach Anspruch 6, wobei das Kommunikationskabel (26) in einer Schleife entlang des ersten Rahmens (20) angeordnet ist.

8. Unterwasserfaserabschlusseinheit (10) zum Unterwasserabschluss des Glasfaserkabels (3) nach Anspruch 7, wobei das Kommunikationskabel (26) in einer Schleife um den Faserabschlussanschluss (28) entlang des ersten Rahmens (20) angeordnet ist.

9. Unterwasserfaserabschlusseinheit (10) zum Unterwasserabschluss des Glasfaserkabels (3) nach einem der Ansprüche 6 bis 8, wobei der Biegeschutz (24) mit einer gekrümmten Oberfläche (25) bereitgestellt ist, die dem Kommunikationskabel (26) zugewandt ist.

10. Unterwasserfaserabschlusseinheit (10) zum Unterwasserabschluss des Glasfaserkabels (3) nach einem der Ansprüche 6 bis 9, wenn auch abhängig von einem der Ansprüche 3 bis 5,wobei dem Kommunikationskabel (26) ermöglicht ist, sich relativ zu dem ersten Rahmen (20) und/oder dem zweiten Rahmen (40) während Bewegung des zweiten Rahmens (40) zwischen dem ersten Zustand (1S) und dem zweiten Zustand (2S) zu bewegen.

11. Unterwasserfaserabschlusseinheit (10) zum Unterwasserabschluss des Glasfaserkabels (3) nach einem der vorhergehenden Ansprüche, wobei der erste Rahmen (20) ein erstes Schutzfach für den Faserabschlussanschluss (28) und einen Teil des Kommunikationskabels (26) definiert.

12. Unterwasserfaserabschlusseinheit (10) zum Unterwasserabschluss des Glasfaserkabels (3) nach Anspruch 11, wobei der erste Rahmen (20) ein erstes Profilelement (21) und einen ersten Schutzdeckel (22) umfasst.

13. Unterwasserfaserabschlusseinheit (10) zum Unterwasserabschluss des Glasfaserkabels (3) nach einem der vorhergehenden Ansprüche, wobei der zweite Rahmen (40) ein zweites Schutzfach für einen Teil des Kommunikationskabels (26) definiert.

14. Unterwasserfaserabschlusseinheit (10) zum Unterwasserabschluss des Glasfaserkabels (3) nach Anspruch 13, wobei der zweite Rahmen (40) ein zweites Profilelement (41) und einen zweiten Schutzdeckel (42) umfasst.

15. Unterwasserfaserabschlusseinheit (10) zum Unterwasserabschluss des Glasfaserkabels (3) nach einem der Ansprüche 3-5 oder einem der Ansprüche 6-14, wenn auch abhängig von einem der Ansprüche 3-5, wobei die Unterwasserfaserabschlusseinheit (10) einen entfernbaren Transportdeckel (23) umfasst, der an dem ersten Rahmen (20) und/oder dem zweiten Rahmen (40) gesichert ist; wobei der entfernbare Transportdeckel (23) der gekrümmten Oberfläche (25) des Biegeschutzes (24) zugewandt ist, wenn die Unterwasserfaserabschlusseinheit (10) in ihrem ersten Zustand (S1) ist; und wobei das Kommunikationskabel (26) zwischen dem entfernbaren Transportdeckel (23) und dem Biegeschutz (24) bereitgestellt ist, wenn die Unterwasserfaserabschlusseinheit (10) in ihrem ersten Zustand (S1) ist.

## Revendications

1. Unité de terminaison de fibre sous-marine (10) pour la terminaison sous-marine d'un câble à fibre optique (3), l'unité de terminaison de fibre sous-marine (10) comprend :
- un premier cadre (20) pouvant être attaché à une fondation sous-marine (30) ;
- un second cadre (40) comprenant une interface de raccordement de communication sous-marine (43) ;
- une borne de terminaison de fibre (28) fixée au premier cadre (20) et pouvant être raccordée à une extrémité proximale (3a) d'un câble à fibre optique (3) ;
**caractérisée en ce que** le second cadre (40) est raccordé de manière pivotante au premier cadre (20) définissant ainsi un axe de pivotement (PA).

2. Unité de terminaison de fibre sous-marine (10) pour la terminaison sous-marine du câble à fibre optique (3) selon la revendication 1, dans laquelle :
- le second cadre (40) présente une première extrémité (40a), où le second cadre (40) est raccordé de manière pivotante au premier cadre (20),
- le second cadre présente une seconde extrémité (40b), où interface de communication de raccordement sous-marine (43) est prévue.

3. Unité de terminaison de fibre sous-marine (10) pour la terminaison sous-marine du câble à fibre optique (3) selon la revendication 2 ; dans laquelle :
- le premier cadre (20) définit un plan de base (BP) ;
- le second cadre (40) définit un axe longitudinal (I40) entre sa première extrémité (40a) et sa seconde extrémité (40b) ;
dans laquelle l'unité de terminaison de fibre sous-marine (10) est conçue pour se trouver dans l'un des états suivants :
- un premier état (1S), où l'axe longitudinal (I40) du second cadre (40) est aligné avec le plan de base (BP) ;
- un second état (2S), où l'axe longitudinal (I40) du second cadre (40) fait saillie à l'opposé du plan de base (BP).

4. Unité de terminaison de fibre sous-marine (10) pour la terminaison sous-marine du câble à fibre optique (3) selon la revendication 3,
dans laquelle l'unité de terminaison de fibre sous-marine (10) comprend un premier mécanisme de verrouillage (51) conçu pour fixer le second cadre (40) par rapport au premier cadre (20) dans le premier état (S1).

5. Unité de terminaison de fibre sous-marine (10) pour la terminaison sous-marine du câble à fibre optique (3) selon la revendication 3 ou la revendication 4,
dans laquelle l'unité de terminaison de fibre sous-marine (10) comprend un second mécanisme de verrouillage (52) conçu pour fixer le second cadre (40) par rapport au premier cadre (20) dans le second état (S2).

6. Unité de terminaison de fibre sous-marine (10) pour la terminaison sous-marine du câble à fibre optique (3) selon l'une quelconque des revendications précédentes, dans laquelle :
- l'unité de terminaison de fibre sous-marine (10) comprend une sécurité contre la flexion (24) raccordée au premier cadre (20) et/ou au second cadre (40) adjacent à l'axe de pivotement (PA) ;
- un câble de communication (26) est guidé à partir de la borne de terminaison de fibre (28) le long du premier cadre (20) et plus loin le long du second cadre (40) vers l'interface de connexion de communication sous-marine (43) par l'intermédiaire de la sécurité contre la flexion (24).

7. Unité de terminaison de fibre sous-marine (10) pour la terminaison sous-marine du câble à fibre optique (3) selon la revendication 6, dans laquelle le câble de communication (26) est agencé en boucle le long du premier cadre (20).

8. Unité de terminaison de fibre sous-marine (10) pour la terminaison sous-marine du câble à fibre optique (3) selon la revendication 7, dans laquelle le câble de communication (26) est agencé en boucle autour de la borne de terminaison de fibre (28) le long du premier cadre (20).

9. Unité de terminaison de fibre sous-marine (10) pour la terminaison sous-marine du câble à fibre optique (3) selon l'une quelconque des revendications 6 à 8, dans laquelle la sécurité contre la flexion (24) est pourvue d'une surface incurvée (25) faisant face au câble de communication (26).

10. Unité de terminaison de fibre sous-marine (10) pour la terminaison sous-marine du câble à fibre optique (3) selon l'une quelconque des revendications 6 à 9, lorsqu'elle dépend également de l'une quelconque des revendications 3 à 5, dans laquelle le câble de communication (26) est autorisé à se déplacer par rapport au premier cadre (20) et/ou au second cadre (40) pendant le mouvement du second cadre (40) entre le premier état (1S) et le second état (2S).

11. Unité de terminaison de fibre sous-marine (10) pour la terminaison sous-marine du câble à fibre optique (3) selon l'une quelconque des revendications précédentes, dans laquelle le premier cadre (20) définit un premier compartiment de protection pour la borne de terminaison de fibre (28) et une partie du câble de communication (26).

12. Unité de terminaison de fibre sous-marine (10) pour la terminaison sous-marine du câble à fibre optique (3) selon la revendication 11, dans laquelle le premier cadre (20) comprend un premier élément de profil (21) et un premier couvercle de protection (22).

13. Unité de terminaison de fibre sous-marine (10) pour la terminaison sous-marine du câble à fibre optique (3) selon l'une quelconque des revendications précédentes, dans laquelle le second cadre (40) définit un second compartiment de protection pour une partie du câble de communication (26).

14. Unité de terminaison de fibre sous-marine (10) pour la terminaison sous-marine du câble à fibre optique (3) selon la revendication 13, dans laquelle le second cadre (40) comprend un second élément de profil (41) et un second couvercle de protection (42).

15. Unité de terminaison de fibre sous-marine (10) pour la terminaison sous-marine du câble à fibre optique (3) selon l'une quelconque des revendications 3 à 5, ou l'une quelconque des revendications 6 à 14, lorsqu'elle dépend également de l'une des revendications 3 à 5, dans laquelle l'unité de terminaison de fibre sous-marine (10) comprend un couvercle de transport amovible (23) fixé au premier cadre (20) et/ou au second cadre (40) ; dans laquelle le couvercle de transport amovible (23) fait face à la surface incurvée (25) de la sécurité contre la flexion (24) lorsque l'unité de terminaison de fibre sous-marine (10) est dans son premier état (S1) ; et dans laquelle le câble de communication (26) est prévu entre le couvercle de transport amovible (23) et la sécurité contre la flexion (24) lorsque l'unité de terminaison de fibre sous-marine (10) est dans son premier état (S1).
